# EUROPEAN PATENT SPECIFICATION

(11) **EP 1 314 753 B1**
(45) Date of publication and mention of the grant of the patent: **27.12.2006**
(21) Application number: 01309918.9
(22) Date of filing: 24.11.2001
(51) Int. Cl.: C08J 9/35, B32B 5/18, E04B 1/78, C09J 175/04, C08K 3/04

(54) **Fire retardant composition**
Flammwidrige Zusammensetzung
Composition ignifuge

(43) Date of publication of application: 28.05.2003
(73) Proprietor: Prometheus Developments Ltd., Ripley, Derbyshire DE5 3DA (GB)
(72) Inventor: Aslin, David Charles c/o Prometheus Dev. Ltd., Derbyshire DE5 3DA (GB)
(74) Representative: Lock, Howard John

(56) References cited:
- EP-A- 0 453 912
- EP-A- 0 539 098
- US-A- 4 233 361
- US-A- 4 596 682
- US-A- 5 246 974

## Description

This invention relates to fire retardant compositions more particularly, but not exclusively the present invention concerns the manufacture of polystyrene composite materials which retain a degree of integrity when exposed to fire regimes, and have significantly reduced flammability. These foams may be used in structures in which fire barriers are required that are thermal insulants and resistant to fire.

Expanded polystyrene foam in slab form is generally used as an insulant in building construction and particularly as the core of insulating sandwich panels and walls, typically in refrigeration applications. The skins of such walls or panels are generally thin precoated steel. The structures may be assembled by the use of adhesives or mechanical fastenings or a combination of both. The foam block may also be used as thermal insulation in building construction.

The conventional process for the production of polystyrene foam slab or forms is as follows:-
(a) Unexpanded polystyrene is supplied from the manufacturer in granular form graded for particle size. This granular polystyrene has a proportion of pentane dissolved in it.
(b) The grains are exposed to heat, usually by steam, in a tall fluidised bed. As the grains pass from the bottom of the fluidised bed to the top, they soften and as the pentane is lost from solid solution, the released gas causes the softened polystyrene granules to expand up to fifty times their original volume. The grains become approximately spherical with a very low density. The expanded polystyrene bead is collected at the top of the bed. The beads still contain a small amount of pentane after this primary expansion process.
(c) The dry beads are introduced into moulds the walls of which are penetrated by many small apertures leading to plenum chambers behind each wall. The charge may be compressed. Steam at pressures not exceeding 1.5 bar is introduced into the vessel containing the polystyrene bead. The polystyrene granules soften and the residual pentane is released. In this second stage the volume expansion of the charge is contained by the mould walls forcing the beads together and fusing them to form a single, lightweight mass of expanded polystyrene foam.
(d) If the mould was in the form of a block, the blocks of expanded polystyrene are subsequently sliced into slabs. These slices are used as the cores of the insulating walls or panels mentioned.

US patent 4,233,361 (ARCO 11/1980) reveals insulating polystyrene/phenolic panels whereby a foaming resol phenolic resin is foamed round the expanded polystyrene bead and the foaming action is promoted by the use of strong acids. EP 0832919A1 reveals a similar material in which pre expanded polystyrene spheres are coated with phenolic resin and cured with microwaves. SA 876051 reveals a similar system whereby the pre expanded polystyrene spheres are coated with a foamed phenolic resin and cured.

With respect to the prior art, application EP 92309426.2 (BPC) reveals a method of cold curing phenolic resins with partial phosphate esters of carbonific polyols derived from a method revealed in AT A 1790-91 (CFB), the work of the current author.

All of these preceding production systems present practical difficulties in production terms given the scale and quantity of polystyrene block that is required.

According to one aspect of this invention, there is provided a structure in the form of a composite panel, the structure comprising: a thermally insulating core formed from a plurality of expanded polymeric beads; two skins thereon sandwiching the cove therebetween, the skins being formed of a non-flammable material, characterised in that the skins are adhered to the core by the adhesive preparation comprising an adhesive and exfoliable graphite.

A fire retarding mixture may comprise a phenolic resin, a flame retardant and, advantageously, a curing agent for facilitating the curing of the phenolic resin.

A process for the production of an article may be provided, the process comprising providing a plurality of expandable polymeric beads, coating the beads with a mixture comprising a phenolic resin, a flame retardant, and, advantageously, a curing agent for facilitating the curing of the phenolic resin to provide a fire retarding composition, arranging the composition in a mould and applying heat thereto to expand the beads and cause the phenolic resin to cure.

A fire retarding composition may be provided comprising a phenolic resin, a flame retardant, advantageously, a curing agent for facilitating the curing of the phenolic resin and a plurality of expandable polymeric beads. Preferably the polymeric beads comprise polystyrene.

The amount of polymeric beads in the composition may be between substantially 40wt% and substantially 70wt%, preferably between substantially 45wt% and substantially 65wt%, more preferably the amounts substantially 50wt%, or substantially 62wt% to substantially 63wt%.

The phenolic resin may be present in the composition in an amount in the range of substantially 10wt% to substantially 30wt%, preferably substantially 12wt% to substantially 25wt%, and more preferably in an amount substantially 15wt%.

The curing agent may be present in the fire retardant composition in an amount in the range of substantially 5wt% to substantially 20wt%, preferably substantially 6wt% to substantially 15wt% of the fire retardant composition and more preferably in an amount of substantially 8wt% to substantially 9wt%.

The flame retardant may be present in the fire retardant composition in an amount in the range of substantially 1wt% to substantially 25wt%, preferably 4wt% to substantially 20wt%, and more preferably in an amount of substantially 16wt%.

Fire stable, low flammability expanded polystyrene foam may be produced by modifying the conventional moulding process in order to coat the expanded polystyrene spheres with a mixture of phenolic resin, neutral and partial phosphate esters and/or chlorinated flame retardants. The mixture is preferably caused to simultaneously expand the spheres and cure the phenolic resin by exposure to steam. The flame retardant system may both penetrate and surround the polystyrene spheres.

A process for the production of low flammability fire stable expanded polystyrene foam blocks, panels or mouldings may be provided whereby the expanded polystyrene spheres are coated in a mixture of liquid resol phenolic resin, low viscosity phosphorus and/or chlorinated flame retardants and acid partial phosphate ester of carbonific polyols and cured by the introduction of steam into the mixture contained in rigid moulds.

Preferably, the mixture produces a phosphorus content of the cured mass of above 3% and may contain phenolic resins at greater than 25% of the total weight of components of the mixture.

An advantage of the preferred embodiment is that it does not require a step or process beyond that which is used in the conventional process for the manufacture of polystyrene productions. The utility of the preferred embodiment of the invention is that the flame resistant polystyrene block can be produced from the same equipment, and within the same process times, as is used in conventional production. In addition, the use of phosphate ester curing agents in the preferred embodiment has the advantage of raising the level of phosphorus to impart flame retardancy.

Neither the penetration of the flame retardants into the expanded polystyrene nor the promotion of the rigid char forming layers can be achieved by the low temperature curing systems revealed in the prior art.

The phenolic resin may be any liquid resol phenolic resin, but is preferably a non-aqueous resol phenolic resin, for example, as described in GB 2291881 (current author). These materials are typified by the absence of water but the presence of di-ethyl ethyl phosphonate as a non-reactive diluent. After final expansion a proportion of water remains in the expanded polystyrene block. Further water is produced from the condensation polymerisation of the phenolic resin so aqueous resol phenolic resins used in this procedure will leave yet more water in the cured block. In practice wet block is allowed to age before sectioning and machining. The use of aqueous phenolic resins will greatly extend this maturing period.

The curing agent may comprise a compound containing phosphor. The flame retardant may comprise a compound containing phosphor. The fire retardant may comprise low viscosity phosphate or phosphonate ester flame retardants which may be added to the phenolic resin. These may be diethyl ethyl phosphonate, di-methyl methyl phosphonate, tri-chloro ethyl phosphate, tri-ethyl phosphate, tris 2 chlor isopropyl phosphate, tris 1, 3 diclor isopropyl phosphate or any other aliphatic low viscosity liquid phosphate or phosphonate ester, preferably providing the ester has no more than three carbon atoms. This low viscosity phosphate ester may be used to dissolve and disperse chlorinated paraffin flame retardants, that are not compatible with phenolic resin.

The acid partial phosphate ester curing agent may be added to this mixture. The curing system is preferably a liquid partial phosphate ester of carbonific polyols. A suitable product is the commercial product Budit 380 (Chemische Fabrik Budenheim). This or any other partial phosphate ester produced by the methods given in AT A 1790-91 is suitable for use in the system. Other acidic phosphate esters of carbonific polyols will function adequately within this system providing the acid value is greater than 300 mgs KOH/gm and the phosphorus content exceeds 17%.

An adhesive preparation may comprise an adhesive material and an exfoliable graphite.

The exfoliable graphite may be present in the adhesive preparation in an amount in the range of substantially 7wt% to substantially 35wt%, preferably in the range of substantially 7wt% to substantially 25wt%, more preferably in an amount of substantially 20wt%.

In one embodiment of the current invention, the prior art process described above is modified by coating the expanded beads derived from the primary expansion as in (b), with phenolic resin containing dissolved flame retardants and acidic partial phosphate esters of carbonific polyols. Additionally, the mixture may be further modified by the addition of metal oxides of group 6b in the periodic table, for example tungsten oxide. The metal oxide may be present in the composition in an amount in the range of substantially 5wt% to substantially 10wt%, preferably substantially 6wt% to substantially 9wt%, more preferably, substantially 7wt% to substantially 8wt%. In some embodiments, the metal oxide may be present in an amount of substantially 7.2wt%.

In this embodiment, the expanded polystyrene beads, coated with the resin mixture are introduced into the mould and exposed to the same steam heating cycle as is described in (c) above. As the polystyrene beads expand through the phenolic resin mixture, some of the phenolic resin and the dissolved flame retardants (which may include the acid phosphate curing system) become dissolved in the polystyrene, forming a polymer alloy. The remainder of the cured phenolic system forms a matrix at the boundary of expansion of each bead. Thus, the steam not only causes the polystyrene to expand as is conventional but also causes or assists in causing the phenolic resin system to cure to a solid and acts to cause some of the flame retardants to permeate into the polystyrene.

When the polystyrene phenolic produced as above is exposed to heat and fire regimes an entirely different behaviour is observed compared with unmodified expanded polystyrene. A proportion of the polystyrene may pyrolise to volatile flammable fractions which will combust in the fire regime, but this effect is reduced by a proportion of the flame retardants producing non-flammable volatile gases. However, the main effect of the invention is that the high phosphorus level achieved by the process, together with the phenolic resin, causes a flame resistant insulating char consisting of a hollow residual matrix to be produced at the fire exposed surface. This insulating char significantly reduces the combustion of the underlying layers. Further, it prevents the underlying layers of the solid material from melting and subsequently dripping into the fire, as is commonly observed during the combustion of conventional expanded polystyrene foam.

The stable char formation and, thus, the durability of the panels under fire conditions may be further enhanced by the addition of exfoliable graphite to the adhesive bonding the outer skins to the modified polystyrene core.

With respect to the prior art, expanded polystyrene bead and phenolic resin have been previously combined to produce fire retardant panels and structures by a variety of methods, all requiring the preparation of the structures by attempting to fill the voids between the spherical beads with foamed or cold cured phenolic resin.

The invention may be best illustrated and specified with reference to the following examples.

Using any of the formulations shown in table 1, the chlorinated paraffin, where used, is dissolved by stirring into the liquid phosphate plasticiser. This mixture is added to the phenolic resin and stirred. The partial phosphate ester is then added to the phenolic resin. If the mixed components are maintained at ambient temperature the mixture has a pot life of up to four hours except where aqueous borne phenolic resins are used, as in example 6, where the pot life may be no more than 30 minutes.

**Table 1**

| Component | 1 | 2 | 3 | 4 | 5 | 6 | 7 | 8 | 9 | 10 |
|---|---|---|---|---|---|---|---|---|---|---|
| 9 mm expanded polystyrene spheres | 50.3 FR | 50.1 FR | 50.5 FR | 50.1 FR | 49.9 FR | 48.4 FR | 49.6 FR | 50.6 FR | 52.5 FR | 52.5 Reg |
| 3 mm expanded polystyrene spheres | | | | | 0.5 | | | | | |
| Non-aqueous phenolic resin⁽¹⁾ | 31 | 25.6 | 13.7 | 16.6 | 31 | | 30.5 | 16.5 | 15.8 | 15.8 |
| Aqueous phenolic resin ⁽²⁾ | | | | | | 29.8 | | | | |
| Di-ethyl ethyl phosphonate | 3.1 | 9.3 | 2 | | 3.1 | 6.9 | | | | |
| Tri-chloro ethyl phosphate | | | | 3.1 | | | 6.1 | | | |
| 70% Chlorinated paraffin | | 2.9 | 2.27 | | | | 1.7 | | | |
| Tris 1, 3 diclor isopropyl phosphate | | | | | | | | 15.3 | 15.9 | 15.9 |
| Tungsten Oxide | | | | | | | | 7.2 | 7.2 | 7.2 |
| Partial phosphate ester⁽³⁾ | 15.5 | 12.2 | 12.4 | 10 | 15.5 | 14.9 | 12.1 | 10.2 | 8.6 | 8.6 |
| Specific gravity (kgms/M³) | 34 | 41 | 41 | 41 | 43 | 40 | 42 | 40.1 | 40 | 39.6 |
| compressive strength MPA | 0.83 | 0.66 | 0.67 | 0.86 | 0.84 | 0.69 | 0.58 | | | |
| Brandshaft rating (DIN 4102) | B2 | B1/2 | B1 | B1 | 82 | B1/2 | B1 | B1 | B1 | B1 |
| Euroclass (From SBI Simulator) | | | | | | E/F | E/F | B | B | B |
| BS 476 Part 7 Class | | | | | | | Z | | | |

| | | | | | | | | | | |
|---|---|---|---|---|---|---|---|---|---|---|
| (1) Represented by HMC IR4393 (2) Represented by Borden Cellobond 2027L (3) Represented by Chemische Fabrik Budenheim Budit 380 FR = conventional fire retarded polystyrene bead containing approx. 1% hexabromocyclododecane Reg. = conventional non-FR polystyrene bead | | | | | | | | | | |

The polystyrene bead is selected fresh from the primary expanded, typically containing 2 to 5% residual pentane. The phenolic flame retardant mixture is stirred into the expanded polystyrene spheres using a planetary paste mixer (dough mixer), a ribbon blender, or any other such low speed mixer capable of giving a tumbling action. The mixing is continued until the polystyrene spheres are evenly coated with the phenolic flame retardant mixture when the mass is then introduced into the mould. Some compression may be applied to compact the mould charge if required.

Steam is introduced into the mould, in the same manner and time cycle as is conventional when using that mould for non-flame retarded product. The block or form is removed from the mould and allowed to mature in the normal manner, whereby the residual water is gradually lost from the product. If the product is a block mould product which is conventionally reduced to panels, it may not be cut with hot wires but must be cut with abrasive wire or band saws.

Scrap crumb or aged expanded polystyrene bead may be used but a significant degree of charge compression will be needed to ensure adequate coherence of the moulding.

The example formulations 1 to 10, table 1 above, show that in some cases the phenolic polystyrene foam has a significant increase in physical strength of between 2 and 3 times that of unmodified expanded polystyrene foam with only minor increase in thermal conductivity. In all cases conventional expanded polystyrene foam is considered flammable when exposed to testing under the DIN 4102 Brandshaft conditions. Similar results are obtained using the BS 476 part 7 measure. The unmodified expanded polystyrene foam is therefore unclassifiable.

In contrast the phenolic modified foam gives flame spread ratings between classes 1 and 3 on the BS 476 part 7 measure. Similar enhanced fire performance results are obtained providing that at all times the weight of the modifying phenolic resin mixture, including neutral and partial phosphate esters, is above 40% of the weight of expanded polystyrene spheres, and the resin mixture contains components to give a phosphorus content of above 6%, thus providing a minimum phosphorus content of 3% to the whole mixture. Likewise, the phenolic resin content should generally be above 15% of the entire mixture. Below this level insufficient char stability will be observed.

Under the conventional fire test measures a degree of combustion (flame spread) is observed, but less so in the presence of chlorine containing flame retardants such as in examples 4 and 7 in table 1. The residual char forms an open cell structure capable of preventing further penetration of the combustion and of supporting itself without melting or dripping molten polystyrene.

However, the two former measures of reaction to fire merely measure the surface spread of flame, whereas the SBI apparatus forces combustion at a higher heat flux and determines the fire growth by calorimetry through oxygen depletion. Adequate and acceptable reaction to fire ratings can be achieved using combinations of phenolic resin with phosphate and chlorine bearing plasticisers. EU Construction Products Directive by incorporating metal oxides acting synergistically as smoke and flame suppressants, as in examples 8 to 10.

When the modified polystyrene foam is used as an insulating core between non-flammable skins and exposed to a cellulosic fire test as a barrier panel, the polystyrene may produce some smoke from anaerobic pyrolisis but the char will remain in place to support the skins and retain the integrity of the fire barrier.

The core of such composite structures will tend to contract under fire conditions. Unmodified polystyrene cores will simply melt and volatilise. The effect of the phenolic resins applied to the polystyrene spheres as described in the foregoing is to leave a reticulated foam, which serves to maintain the insulation. However, phenolic foams themselves have a marked tendency to contract under fire conditions, particularly when used as cores between non-flammable skins. While the phosphate plasticisers incorporated according to this method will reduce this effect, the contraction of both polystyrene and the phenolic/polystyrene mixtures can be offset.

Conventionally, composite panels of polystyrene cores with thin steel skins are constructed by securing the skins to the core with an adhesive. If this adhesive is modified by the addition of exfoliable graphite, the expansion of this graphite under fire conditions compensates for the observed contraction.

Exfoliable graphite consists of native graphite treated with various acids such as sulphuric, nitric or hydrofluoric so that those additions together with water become entrapped between the planes of the graphite crystals at up to 10% of the weight of the final product. When such treated graphites are exposed to heat the entrapped materials are released as gas causing the graphite to expand to up to 250 times its original volume.

The effect may be illustrated by the following examples.

Cores of various polystyrene foam formulations, 100 mm thick and 600 mm square, were coated with a layer of a moisture curing polyurethane glue conventionally used in such constructions. For these examples the adhesive used as Apollo Chemicals product A 7525 moisture curing adhesive which is representative of common practice. To this adhesive between 7% and 25% by weight of exfoliable graphite was added and dispersed. Below 7% addition, the expansion of the exfoliable graphite is insufficient to fully compensate for the contraction of the cores. Above 35% addition the flow and tac qualities of the adhesive are severely and unacceptably effected.

The skins of 1 mm thick plastisol coated steel were pressed to the polystyrene cores and allowed to cure. Thermocouples were fixed to one face of each panel and the panel assembled on a furnace capable of reproducing the EN 1363-1 (BS476 part 20) cellulosic fire curves. The panels were then exposed to this fire curve and the back face temperature recorded. The results are shown in table 2.

**Table 2**

| **Example No** | | | **Time (Mins) to Δ 140°C Backface Temp.** |
|---|---|---|---|
| | | | |
| | Core | Exfoliable Graphite in Adhesive | |
| 11 | Conventional Polystyrene Slab | Absent | 17 |
| 12 | Conventional Polystyrene Slab | Present | 37 |
| 13 | Formulation 4 Table 1 | Absent | 55 |
| 14 | Formulation 7 Table 1 | Absent | 52 |
| 15 | Formulation 7 Table 1 | Present | 61 |
| 16 | Formulation 8 Table 1 | Present | 58 |
| 17 | Formulation 9 Table 1 | Present | 69 |
| 18 | Formulation 10 Table 1 | Present | 80 |

Thus, using polystyrene, insulating panels may be constructed using conventional techniques that are able to achieve extended fire protection ratings and additionally are composed of cores that achieve superior results under any current measure of reaction to fire.

## Claims

1. A structure in the form of a composite panel, the structure comprising: a thermally insulating core formed from a plurality of expanded polymeric beads; two skins thereon sandwiching the cove therebetween, the skins being formed of a non-flammable material, **characterised in that** the skins are adhered to the core by the adhesive preparation comprising an adhesive and exfoliable graphite.

2. A structure according to claim 1, wherein the exfoliable graphite is present in the adhesive preparation in the range of substantially 7 wt% to substantially 25 wt% of the adhesive preparation.

3. A structure according to claim 1 or 2 wherein the core includes a phenolic resin, a flame retardant, and a curing agent for the curing of the phenolic resin.

4. A structure according to claim 3, wherein the phenolic resin is present in an amount in the range of substantially 10wt% to substantially 30wt% of the composition.

5. A structure according to claim 3 or 4, wherein the curing agent is a phosphate ester.

6. A structure according to claim 5, wherein the phosphate ester is an acid partial phosphate ester of a polyol.

7. A structure according to any of claims 3 to 6, wherein the curing agent is present in an amount in the range of substantially 5wt% to substantially 20wt% of the composition.

8. A structure according to any of claims 3 to 7, wherein the flame retardant is a phosphate ester and/or a phosphonate ester.

9. A structure according to claim 8, wherein the flame retardant is one or more of di-ethyl ethyl phosphonate, di-methyl methyl phosphonate, tri-chloro ethyl phosphate, tri-ethyl phosphate, tris 2 chlor isopropyl phosphate, tris 1, 3 dichlor isopropyl phosphate.

10. A structure according to claim 8 or 9, wherein the phosphate or phosphonate ester has no more than three carbon atoms.

11. A structure according to any of claims 3 to 10, wherein the flame retardant is present in an amount in the range of substantially 1wt% to substantially 25wt% of the composition.

12. A structure according to any of claims 3 to 11, wherein the flame retardant includes a chlorinated paraffin.

13. A structure according to any of claims 3 to 12 further including oxides of metals from group 6b of the periodic table.

14. A structure according to Claim 13 wherein the metal oxide is tungsten oxide.

15. A structure according to Claim 13 or 14 wherein the metal oxide is present in an amount in the range of substantially 5wt% to substantially 10wt% of the composition.

16. A structure according to any of claims 3 to 15 wherein the amount of polymeric beads is in the range of substantially 40wt% to substantially 70wt%.

## Patentansprüche

1. Struktur in Form einer Verbundplatte, wobei die Struktur aufweist: einen thermisch isolierenden Kern, der aus einer Vielzahl expandierter Polymer-Kügelchen bzw. Polymer-Perlen gebildet ist; zwei daran angeordnete Deckschichten, die den Kern zwischen ihnen sandwichartig einbetten, wobei die Deckschichten aus einem nicht-entflammbaren Material gebildet sind, **dadurch gekennzeichnet, dass** die Deckschichten an dem Kern durch eine Klebstoff-Zubereitung angeklebt sind, die einen Klebstoff und abschieferbaren Graphit aufweist.

2. Struktur nach Anspruch 1, **dadurch gekennzeichnet, dass** der abschieferbare Graphit in der Klebstoff-Zubereitung in einem Bereich von etwa 7 Gew% bis etwa 25 Gew% der Klebstoff-Zubereitung vorhanden ist.

3. Struktur nach Anspruch 1 oder 2, **dadurch gekennzeichnet, dass** der Kern ein Phenolharz, einen Flammenverzögerer und ein Aushärtungsmittel zum Aushärtenlassen des Phenolharzes enthält.

4. Struktur nach Anspruch 3, **dadurch gekennzeichnet, dass** das Phenolharz in einer Menge im Bereich von etwa 10 Gew% bis etwa 30 Gew% der Zusammensetzung vorhanden ist.

5. Struktur nach Anspruch 3 oder 4, **dadurch gekennzeichnet, dass** das Aushärtungsmittel ein Phosphatester ist.

6. Aufbau nach Anspruch 5, **dadurch gekennzeichnet, dass** der Phosphatester ein partieller Säure-Phosphatester eines Polyols ist.

7. Struktur nach einem der Ansprüche 3 bis 6, **dadurch gekennzeichnet, dass** das Aushärtungsmittel in einer Menge im Bereich von etwa 5 Gew% bis etwa 20 Gew% der Zusammensetzung vorhanden ist.

8. Struktur nach einem der Ansprüche 3 bis 7, **dadurch gekennzeichnet, dass** der Flammenverzögerer ein Phosphatester und/oder ein Phosphonatester ist.

9. Struktur nach Anspruch 8, **dadurch gekennzeichnet, dass** der Flammenverzögerer eine oder mehrere der folgenden Substanzen aufweist: Diethylethylphosphonat, Dimethylmethylphosphonat, Trichloroethylphosphat, Triethylphosphat, Tris-2-Chlorisopropylphosphat, Tris-1,3-Dichlorisopropylphosphat.

10. Struktur nach Anspruch 8 oder 9, **dadurch gekennzeichnet, dass** der Phosphat- oder Phosphonatester nicht mehr als drei Kohlenstoffatome hat.

11. Struktur nach einem der Ansprüche 3 bis 10, **dadurch gekennzeichnet, dass** der Flammenverzögerer in einer Menge im Bereich von etwa 1 Gew% bis etwa 25 Gew% der Zusammensetzung vorhanden ist.

12. Struktur nach einem der Ansprüche 3 bis 11, **dadurch gekennzeichnet, dass** der Flammenverzögerer ein chloriertes Paraffin enthält.

13. Struktur nach einem der Ansprüche 3 bis 12, **dadurch gekennzeichnet, dass** sie Metalloxide der Gruppe 6b des Periodensystems enthält.

14. Struktur nach Anspruch 13, **dadurch gekennzeichnet, dass** das Metalloxid Wolframoxid ist.

15. Struktur nach Anspruch 13 oder 14, **dadurch gekennzeichnet, dass** das Metalloxid in einer Menge im Bereich von etwa 5 Gew% bis etwa 10 Gew% der Zusammensetzung vorhanden ist.

16. Struktur nach einem der Ansprüche 3 bis 15, **dadurch gekennzeichnet, dass** die Menge der Polymer-Kügelchen bzw. Polymer-Perlen im Bereich von etwa 40 Gew% bis etwa 70 Gew% liegt.

## Revendications

1. Structure ayant la forme d'un panneau composite, la structure comprenant : un noyau isolant thermiquement formé d'une pluralité de billes polymériques expansées ; deux peaux sur celui-ci prenant en sandwich le noyau situé entre elles, les peaux étant formées d'un matériau non-inflammable, **caractérisé en ce que** les peaux sont collées au noyau par la préparation adhésive comprenant un graphite adhésif et exfoliable.

2. Structure selon la revendication 1, dans laquelle le graphite exfoliable est présent dans la préparation adhésive en une quantité comprise entre 7 % en poids substantiellement et 25 % en poids substantiellement de la préparation adhésive.

3. Structure selon la revendication 1 ou 2 dans laquelle le noyau inclut une résine phénolique, un ignifuge, et un agent de réticulation pour la réticulation de la résine phénolique.

4. Structure selon la revendication 3, dans laquelle la résine phénolique est présente en une quantité comprise entre 10 % en poids substantiellement et 30 % en poids substantiellement de la composition.

5. Structure selon la revendication 3 ou 4, dans laquelle l'agent de réticulation est un ester phosphate.

6. Structure selon la revendication 5, dans laquelle l'ester phosphate est un phosphate acide partiel d'un polyol.

7. Structure selon l'une quelconque de revendications 3 à 6, dans laquelle l'agent de réticulation est présent en une quantité comprise entre 5% en poids substantiellement et 20 % en poids substantiellement de la composition.

8. Structure selon l'une quelconque des revendications 3 à 7, dans laquelle l'ignifuge est un ester phosphate et/ou un ester phosphonate.

9. Structure selon la revendication 8 dans laquelle l'agent ignifuge est un, ou plus, des agents choisis parmi l'éthyl phosphonate de di-éthyle, le méthyl phosphonate de di-méthyle, le phosphanate de tri-chloro éthyle, le phosphate de tri-éthyle, le phosphate de tris (2-chloro) isopropyle, le phosphate de tris (1,3-dichloro) isopropyle.

10. Structure selon la revendication 8 ou 9, dans laquelle le phosphate ou le phosphonate n'a pas plus de trois atomes de carbone.

11. Structure selon l'une quelconque des revendications 3 à 10, dans laquelle l'ignifuge est présent en une quantité comprise entre 1 % en poids substantiellement et 25 % en poids substantiellement de la composition.

12. Structure selon l'une quelconque des revendications 3 à 11, dans laquelle l'ignifuge inclut une paraffine chlorée.

13. Structure selon l'une quelconque des revendications 3 à 12 comprenant en outre des oxydes de métaux du groupe 6b du tableau périodique.

14. Structure selon la revendication 13 dans laquelle l'oxyde de métal est l'oxyde de tungstène.

15. Structure selon la revendication 13 ou 14 dans laquelle l'oxyde de métal est présent en une quantité comprise entre 5 % en poids substantiellement et 10 % en poids substantiellement de la composition

16. Structure selon l'une quelconque des revendications 3 à 15 dans laquelle la quantité de perles polymériques est comprise entre 40 % en poids substantiellement et 70 % en poids substantiellement.
